# EUROPEAN PATENT SPECIFICATION

(11) **EP 3 174 245 B1**
(45) Date of publication and mention of the grant of the patent: **13.03.2019**
(21) Application number: 14882059.0
(22) Date of filing: 11.12.2014
(51) Int. Cl.: H04L 12/24

(54) **METHOD FOR DISCOVERING TOPOLOGY NETWORK, NETWORK DEVICE AND STORAGE MEDIUM**
VERFAHREN ZUR ENTDECKUNG EINES TOPOLOGIENETZWERKS, NETZWERKVORRICHTUNG UND SPEICHERMEDIUM
PROCÉDÉ DE DÉCOUVERTE D'UN RÉSEAU À TOPOLOGIE, DISPOSITIF DE RÉSEAU ET SUPPORT D'INFORMATIONS

(30) Priority: 24.07.2014 CN 201410356381
(43) Date of publication of application: 31.05.2017
(73) Proprietor: ZTE Corporation, Shenzhen, Guangdong 518057 (CN)
(72) Inventor: LIU, Lei, Shenzhen, Guangdong 518057 (CN); ZHOU, Zhiwei, Shenzhen, Guangdong 518057 (CN); CHEN, Lujing, Shenzhen, Guangdong 518057 (CN)
(74) Representative: Savi, Massimiliano
(86) International application number: PCT/CN2014/093622
(87) International publication number: WO 2015/117498

(56) References cited:
- WO-A1-2014/110453
- CN-A- 102 904 837
- CN-A- 103 379 010
- CN-A- 103 491 129
- US-B2- 7 590 072
- "Network Function Virtualization (NFV) Management and Orchestration;NFV-MAN001v061- management and orchestration", ETSI DRAFT; NFV-MAN001V061- MANAGEMENT AND ORCHESTRATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, no. V0.6.1, 8 July 2014 (2014-07-08), pages 1-196, XP014184876, [retrieved on 2014-07-08]
- "Network Functions Virtualisation (NFV); Architectural Framework;gs_NFV002v010101p", ETSI DRAFT; GS_NFV002V010101P, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. LI, no. V1.1.1, 17 June 2014 (2014-06-17), pages 1-21, XP014184939, [retrieved on 2014-06-17]

## Description

### Technical Field

The present invention relates to the communication network management technology, and in particular to a method for discovering a topology network, a network device and a storage medium.

### Background

In the related art, network functions are all implemented through network devices exclusively possessed or specially designed by manufacturers, and the network functions and the network devices are in a super-strong coupled relation, which has many inconveniences in practical applications. Network Function Virtualization NFV achieves the separation of the network functions and the network devices, and achieves the independent development of software and hardware, and reduces costs of the network through the virtualization of computing resources, storage resources and network resources. However, the NFV requires that the network functions should be deployed dynamically and flexibly and not be limited by physical networks.

According to the specification requirements of the European Telecommunications Standards Institute ETSI, a set of automated deployment specifications is defined in a Network Function Virtualization Management and Orchestration NFV-MANO domain to implement a set of virtualized application deployment flow and architecture. The architecture includes: a Network Functions Virtualization Orchestrator NFVO, a Virtualized Network Function Manager VNFM and a Virtualized Network Function VNF and so on. Herein, the NFVO is responsible for managing and scheduling VNFs and resources in a virtualization management platform, and the VNFM is responsible for life cycle management of the VNFs.

The automated deployment of the virtualization network includes the following operations. A user, or an Operations Support System OSS, or a Business Support System BSS, or an Element Management System EMS or the like initiates a VNF instance establishment request to the NFVO. The NFVO sends the VNF instance establishment request to the VNFM after completing the validity verification, and transfers file location information of a VNF packet to the VNFM. The VNFM performs resource verification and computation after downloading the VNF information, and returns a computation result to the NFVO. The NFVO allocates resources according to resource list information returned by the VNFM and notifies the VNFM to start a VNF. After the start of the VNF is completed, an initialization flow of the automated deployment of the virtualization network ends, and thereby the VNF instantiation is completed.

The virtualization network will elastically stretch in operation, so that the network is continuously changed. On one hand, since a traditional method for discovering the topology network cannot initiatively perceive the establishment or cancel of network nodes, and also cannot accurately judge the cancel of the network nodes and the network broken link abnormity, human intervention is required. On the other hand, the EMS manages the topology network by directly interacting with the network nodes like the VNF and so on, which will greatly reduce the processing performance of the EMS.

The document "Network Function Virtualization (NFV) management and Orchestration; NFV-MAN 001v061-management and orchestration" relates to network function virtualization (NFV) management and orchestration.

### Summary of the Invention

In view of this, embodiments of the present invention expect to provide a method for discovering a topology network according to claim 1, a system for discovering a topology network according to claim 9, and a storage medium according to claim 15, which can rapidly and accurately discover the topology network in the virtualized network deployment and operation process.

The technical scheme of the examples of the present invention is implemented as follows.

Also provided is a method for discovering a topology network, the method includes: a virtualized network function manager VNFM acquires access information of a virtualized network function, VNF, managed by the VNFM itself, and sends the acquired access information to an element management system EMS.

In one example, before the VNFM acquires the access information of the VNF managed by the VNFM itself, the method further includes the VNFM receives an access request sent by the EMS, and sends access information of the VNFM itself to the EMS according to the access request.

In one example, the VNFM acquiring access information of a VNF managed by the VNFM itself includes the VNFM sends an access agent information request to all VNFs managed by the VNFM itself, and receives the access information of the VNFs sent by the VNFs.

In one example, the method further includes the VNFM sends a notification of cancelling access of a VNF to the EMS when the VNF managed by the VNFM is cancelled.

The example of the present invention further provides a method for discovering a topology network. The method includes an EMS receives access information, sent by a VNFM, of a VNF managed by the VNFM, and accesses the VNF to EMS topology management according to the access information.

In one example, before the EMS receives the access information, sent by the VNFM, of the VNF managed by the VNFM, the method further includes that when querying that there is a VNFM, the EMS acquires access information of the VNFM and accesses the VNFM to EMS topology management according to the access information of the VNFM.

In one example, accessing the VNF to EMS topology management according to the access information includes: according to an FTP path of an agent request information file for a VNF to access EMS in the access information, downloading and parsing the request information file for accessing EMS, and accessing the VNF to the EMS topology management.

In one example, after the EMS accesses the VNF to the EMS topology management, the method further includes the EMS receives a notification, sent by the VNFM, of cancelling access of a VNF, and deleting the access of the VNF according to the notification.

Also provided is a system for discovering a topology network, comprising a VNFM, and the VNFM includes a first acquisition module and a first sending module.

The first acquisition module is arranged to acquire access information of a VNF managed by the VNFM itself.

The first sending module is arranged to send the acquired access information to an EMS.

In one example, the VNFM further includes a first receiving module, arranged to receive an access request sent by the EMS.

Correspondingly, the first sending module is arranged to send access information of the VNFM itself according to the access request.

In one example, the first acquisition module is arranged to send an access agent information request to all VNFs managed by the VNFM itself, and receive the access information of the VNFs sent by the VNFs.

In one example, the first sending module is further arranged to send a notification of cancelling access of a VNF to the EMS when the VNF managed by the VNFM is cancelled.

An example of the present invention further provides an EMS, and the EMS includes a second receiving module and an access module.

The second receiving module is arranged to receive access information, sent by the VNFM, of a VNF managed by the VNFM.
the access module is arranged to access the VNF to EMS topology management according to the access information.

In one example, the EMS further includes a second acquisition module, arranged to query a VNFM and acquire access information of the VNFM.

Correspondingly, the access module is further arranged to access the VNFM to EMS topology management according to the access information of the VNFM.

In one example, the access module is arranged to, according to an FTP path of an agent request information file for a VNF to access EMS in the access information, download and parse the request information file for accessing EMS, and access the VNF to the EMS topology management.

In one example, the EMS further includes a deletion module arranged to delete the access of a VNF according to the notification after the second receiving module receives a notification, sent by the VNFM, of cancelling access of the VNF.

Also provided is a computer storage medium, and a computer executable instruction is stored in the computer storage medium, and the computer executable instruction is used for executing the above method for discovering a topology network.

With the method for discovering a topology network, the network device and the computer storage medium provided in the present invention, the VNFM acquires the access information of the VNF managed by the VNFM itself and sends the acquired access information of the VNF to the EMS; and the EMS accesses the VNF to the EMS topology management according to the received access information of the VNF. In that way, the EMS initiatively discovers the lifecycle change of the VNFM by querying the VNFM, which reduces human intervention factors of the EMS network topology. Since the number of VNFMs in the telecommunication network is much less than the number of VNFs, the change of the VNFs in the network is sent to the EMS through the VNFMs, so that the EMS is not required to directly interact with the VNFs when performing topology network management. Therefore, the load of the EMS directly managing the VNFs is reduced, and the performance of the EMS managing the network topology is effectively improved.

Especially when a VNF managed by the VNFM is cancelled, the VNFM initiatively notifies the EMS to cancel the VNF, which solves the problem that the EMS cannot perceive the change of the topology network after the VNF is cancelled in the traditional method for discovering a topology network, makes the EMS accurately acquire the change of the topology network, and improves the accuracy of the EMS managing the topology network.

### Description of Drawings

FIG. 1 is a schematic diagram of a basic processing flow of a method for a VNFM side discovering a topology network according to an example of the present invention.
FIG. 2 is a schematic diagram of a basic processing flow of a method for an EMS side discovering a topology network according to an example of the present invention.
FIG. 3 is a schematic diagram of a processing flow of a method for discovering a topology network according to an example one of the present invention.
FIG. 4 is a processing flow of an EMS cancelling access of the VNF according to an example two of the present invention.
FIG. 5 is a schematic diagram of a processing flow of a method for discovering a topology network according to an example three of the present invention.
FIG. 6 is a schematic diagram of a composition structure of the VNFM according to an example of the present invention.
FIG. 7 is a schematic diagram of a composition structure of the EMS according to an example of the present invention.

### Specific Examples

In examples of the present invention, a VNFM acquires access information of a VNF managed by the VNFM itself and sends the acquired access information of the VNF to an EMS; and the EMS accesses the VNF to EMS topology management according to the received access information of the VNF.

Furthermore, when a VNF managed by the VNFM is cancelled, the VNFM sends a notification of cancelling access of the VNF to the EMS, and the EMS deletes the VNF according to the received notification of cancelling the access of the VNF.

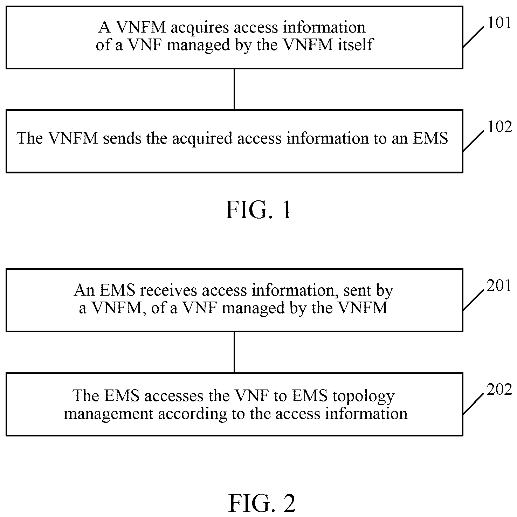

A basic processing flow of a method for a VNFM side discovering a topology network according to an example of the present invention includes the following steps as shown in FIG. 1.

In step 101, a VNFM acquires access information of a VNF managed by the VNFM itself.

Specifically, the VNFM sends an EMS access agent information request to all VNFs managed by the VNFM itself.

Each VNF acquires its own access information according to the EMS access agent information request and a defined standard interface for accessing the EMS between the VNF and the VNFM, and generates and stores an agent request information file for accessing EMS.

Each VNF sends a File Transfer Protocol FTP path of the file to the VNFM.

The VNFM acquires the access information of the VNFs according to the received FTP paths.

Herein, the number of VNFs managed by the VNFM may be one, and may also be more; and the access information includes an identifier of the accessed VNF.

In step 102, the VNFM sends the acquired access information to an EMS.

Specifically, the VNFM sends the identifier of the accessed VNF and the FTP path of the agent request information file for accessing EMS to the EMS.

Before the step 101 is executed, the method also includes:
the VNFM receives an access request sent by the EMS, and sends access information of the VNFM itself to the EMS according to the access request.

The access information includes: an identifier of the VNFM, an access operation identifier, an Internet Protocol IP address and port of the VNFM, a connection mode of the VNFM, a connection user name and a connection password and so on.

After the step 102 is executed, the method also includes:
the VNFM sends a notification of cancelling access of a VNF to the EMS when the VNF managed by the VNFM is cancelled.

Herein, the notification includes an identifier of the VNF and a delete operation identifier.

A basic processing flow of a method for an EMS side discovering a topology network according to an example of the present invention includes the following steps as shown in FIG. 2.

In step 201, an EMS receives access information, sent by a VNFM, of a VNF managed by the VNFM.

Specifically, the EMS may send a VNF discovery request to the VNFM; and the VNFM acquires access information of a VNF managed by the VNFM itself according to the discovery request and sends the access information of the VNF to the EMS. Or the VNFM may initiatively send access information of a VNF managed by the VNFM itself to the EMS and send the access information the VNF to the EMS.

Herein, the access information of the VNF includes an identifier of an accessed VNF and an FTP path of an agent request information file for accessing EMS.

In step 202, the EMS accesses the VNF to EMS topology management according to the access information.

Specifically, the EMS downloads and parses the agent request information file for accessing EMS according to the received FTP path of the agent request information file for accessing EMS, and accesses the VNF to the EMS topology management.

Herein, how the EMS to parse the EMS agent request information file belongs to the related art, and will not be repeated here.

Before the step 201 is executed, the method also includes:
when querying that there is a VNFM, the EMS acquires access information of the VNFM.

Specifically, the EMS queries a VNFM in a network managed by the EMS itself, and sends an access EMS request to the queried VNFM, and receives access information of the VNFM sent by the VNFM.

And the EMS accesses the VNFM to EMS topology management according to the access information of the VNFM.

After the step 202 is executed, the method also includes:
the EMS receives a notification, sent by the VNFM, of cancelling access of a VNF, and deletes the access of the VNF according to the notification.

Specifically, after receiving the notification, sent by the VNFM, of cancelling access of a VNF, the EMS searches for an accessed VNF according to an identity of a VNF instance in the notification, and deletes the access of the VNF in the topology management of the EMS.

### Example one

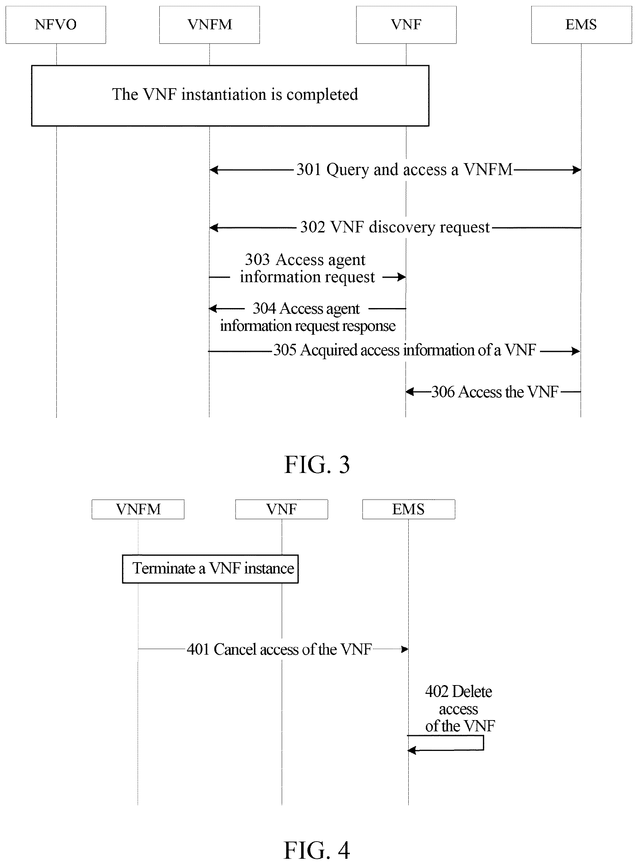

In a scene of executing the instantiation operation under the NFVO, a processing flow of a method for discovering a topology network according to an example one of the present invention includes the following steps as shown in FIG. 3.

In step 301, when querying that there is a VNFM, an EMS acquires access information of the VNFM, and accesses the VNFM to EMS topology management according to the access information of the VNFM.

Specifically, the EMS queries a VNFM in a network managed by the EMS itself, and sends an access request to the queried VNFM.

The VNFM sends access information of the VNFM itself to the EMS according to the access request. Herein, the accessing information includes: an identifier of the VNFM, an access operation identifier, an IP address and port of the VNFM, a connection mode of the VNFM, a connection user name and a connection password and so on.

The EMS receives the access information of the VNFM sent by the VNFM, and accesses the VNFM to the EMS topology management according to the access information of the VNFM.

In step 302, the EMS sends a VNF discovery request to the VNFM.

In step 303, the VNFM sends an access agent information request to all VNFs managed by the VNFM itself after receiving the discovery request.

Herein, the access agent information request includes: an identifier of the VNF, an access operation identifier, an IP address and port of the VNF, a connection mode of the VNF, a connection user name and a connection password and so on.

In step 304, a VNF acquires its own access information according to the EMS access agent information request and a defined standard interface for accessing the EMS between the VNF and the VNFM, generates and stores an agent request information file for accessing EMS, and sends an FTP path of the file to the VNFM.

In step 305, the VNFM sends the acquired access information to the EMS.

Specifically, the VNFM sends the identifier of the accessed VNF and the FTP path of the agent request information file for accessing EMS to the EMS.

In step 306, the EMS accesses the VNF to EMS topology management according to the access information.

Specifically, according to the received FTP path of the agent request information file for accessing EMS, the EMS downloads and parses the agent request information file for accessing EMS, and accesses the VNF to the EMS topology management.

Herein, how the EMS to parse the EMS agent request information file belongs to the related art, and will not be repeated here.

In the example one of the present invention, if the EMS has accessed the VNFM to the EMS topology management, it is not required to execute the step 301.

### Example two

After the VNF instantiation is completed, the VNFM to which the VNF belongs sends the access information of the VNF managed by the VNFM itself to the EMS, and in a scene of the EMS accessing the VNF to the EMS topology management, the VNF is terminated under the NFVO. A processing flow of the EMS cancelling access of a VNF according to an example two of the present invention includes the following steps as shown in FIG. 4.

In step 401, a VNFM terminates a VNF, and sends a notification of cancelling access of the VNF to an EMS.

Herein, the notification includes an identifier of the VNF and a delete operation identifier.

In step 402, the EMS receives the notification, sent by the VNFM, of cancelling the access of a VNF, and deletes the access of the VNF according to the notification.

Specifically, after receiving the notification, sent by the VNFM, of cancelling the access of a VNF, the EMS searches for an accessed VNF according to an identity of a VNF instance in the notification, and deletes the access of the VNF in the topology management of the EMS.

### Example three

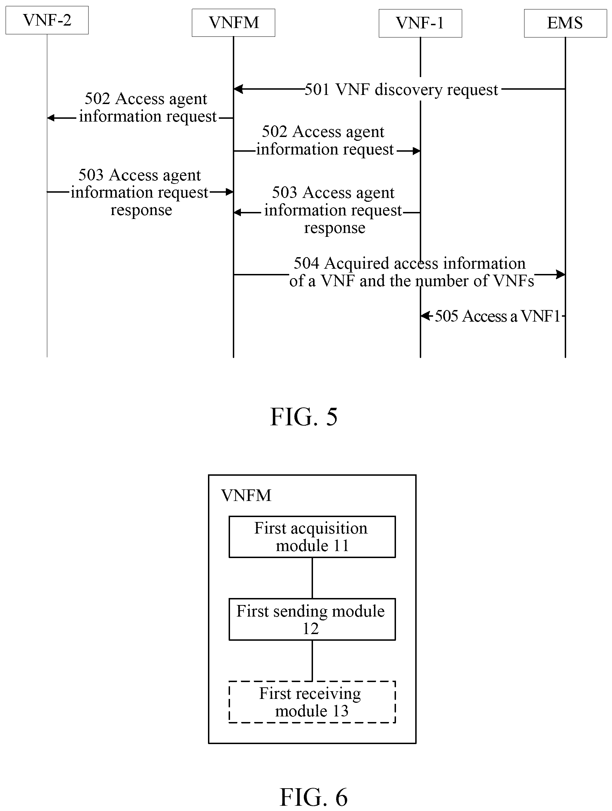

By taking a scene that the VNFM has accessed the EMS, and the VNFM manages two VNFs, i.e. a VNF1 and a VNF2, and the network of the VNF2 is disconnected as an example, a processing flow of a method for discovering a topology network according to an example 3 of the present invention includes the following steps as shown in FIG. 5.

In step 501, an EMS sends a VNF discovery request to an accessed VNFM.

In step 502, the VNFM sends an access agent information request to a VNF1 and a VNF2 after receiving the discovery request.

Herein, the access agent information request includes an identifier of the VNF, an access operation identifier, an IP address and port of the VNF, a connection mode of the VNF, a connection user name and a connection password and so on.

In step 503, the VNF1 acquires access information of the VNF1 according to the EMS access agent information request and a defined standard interface for accessing the EMS between the VNF and the VNFM, generates and stores an agent request information file for accessing EMS, and sends an FTP path of the file to the VNFM.

Since the network of the VNF2 is disconnected, the VNF2 cannot acquire access information of the VNF2.

In step 504, the VNFM sends the acquired access information of the VNF1 and the number of VNFs managed by the VNFM to the EMS.

Specifically, the VNFM sends an identifier of the VNF1 and the FTP path of the agent request information file for accessing EMS to the EMS, and sends the number of accessed VNFs to the EMS.

In step 505, the EMS accesses the VNF to the EMS topology management according to the access information.

Specifically, the EMS downloads and parses the agent request information file for accessing EMS according to the received FTP path of the agent request information file for accessing EMS, and accesses the VNF1 to the EMS topology management.

Herein, how the EMS to parse the EMS agent request information file belongs to the related art, and will not be repeated here.

In the step, since the query of the access information of the VNF2 is failed, the flow may also continue to execute the steps 501-504 according to the actual needs.

To implement the above method for discovering a topology network, the example of the present invention further provides a VNFM. A composition structure of the VNFM includes a first acquisition module 11 and a first sending module 12 as shown in FIG. 6.

The first acquisition module 11 is arranged to acquire access information of a VNF managed by the VNFM itself.

Herein, the accessing information includes an identifier of the VNFM, an access operation identifier, an IP address and port of the VNFM, a connection mode of the VNFM, a connection user name and a connection password and so on.

The first sending module 12 is arranged to send the acquired access information to an EMS.

In one example, the VNFM also includes a first receiving module 13, arranged to receive an access request sent by the EMS.

Correspondingly, the first sending module 12 is arranged to send access information of the VNFM itself according to the access request.

In one example, the first acquisition module 11 is arranged to send an access agent information request to all VNFs managed by the VNFM itself, and receive the access information of the VNFs sent by the VNFs.

In one example, the first sending module 12 is arranged to send an agent request information file for accessing EMS and a file transfer protocol FTP path of the file to the EMS.

In one example, the first sending module 12 is further arranged to send a notification of cancelling access of a VNF to the EMS when the VNF managed by the VNFM is cancelled.

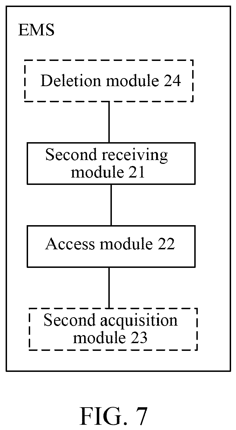

An example of the present invention also provides an EMS. A composition structure of the EMS includes a second receiving module 21 and an access module 22 as shown in FIG. 7.

The second receiving module 21 is arranged to receive access information, sent by a VNFM, of a VNF managed by the VNFM.

Herein, the access information of the VNF includes an identifier of an accessed VNF and an FTP path of an agent request information file for accessing EMS.

The access module 22 is arranged to access the VNF to EMS topology management according to the access information.

In one example, the EMS also includes a second acquisition module 23, arranged to query a VNFM and acquire access information of the VNFM.

Correspondingly, the access module 22 is arranged to access the VNFM to EMS topology management according to the access information of the VNFM.

In one example, the access module 22 is arranged to, according to an FTP path of an agent request information file for a VNF to access EMS in the access information, download and parse the request information file for accessing EMS, and access the VNF to the EMS topology management.

In one example, the second acquisition module 23 is arranged to query a VNFM in a network managed by the VNF, and send an access EMS request to the queried VNFM, and receive access information of the VNFM sent by the VNFM.

In one example, the EMS also includes a deletion module 24, arranged to, after the second receiving module 21 receives a notification, sent by the VNFM of cancelling access of a VNF, delete the access of the VNF according to the notification.

The first acquisition module 11, the first sending module 12, the first receiving module 13, the second receiving module 21, the access module 22, the second acquisition module 23 and the deletion module 24 disclosed in the examples of the present invention may all be implemented through a processor, and certainly may also be implemented through a specific logic circuit. Herein, the processor may be a processor on the VNFM or the EMS. The processor may be a central processing unit CPU, a microprocessor MPU, a digital signal processor DSP or a field programmable gate array FPGA and the like in the practical applications.

In the examples of the present invention, if implemented in the form of a software function module and sold or used as an independent product, the above method for discovering a topology network may also be stored in a computer readable storage medium. Based on such understanding, the essence or the part that make contributions to the related art of the technical scheme of the examples of the present invention may be reflected in the form of a software product. The computer software product is stored in one storage medium, including a plurality of instructions used to make one computer device (may be a personal computer, a server or a network device, etc.) execute all or part of the methods in various examples of the present invention. Moreover, the foresaid storage medium includes various mediums that can store program codes: a U disk, a mobile hard disk, a Read Only Memory ROM, a diskette or an optical disk and the like. Therefore, the examples of the present invention are not limited to any combination of hardware and software in a specific form.

Correspondingly, the example of the present invention also provides a computer storage medium, and a computer program is stored in the computer storage medium, and the computer program is used for executing the above method for discovering the topology network according to the examples of the present invention.

The above description is only the alternative examples of the present invention, which is not used to limit the protection scope of the present invention which is defined in the appended claims.

## Claims

1. A method for discovering a topology network, comprising:
a virtualized network function manager, VNFM, acquiring access information of a virtualized network function, VNF, managed by the VNFM itself, **characterized in that**, the VNFM acquiring the access information of the VNF managed by the VNFM itself comprises: the VNFM sending an EMS access agent information request to all VNFs managed by the VNFM itself; each VNF acquiring its own access information according to the EMS access agent information request and a defined standard interface for accessing EMS between the VNF and the VNFM, and generating and storing an agent request information file for accessing EMS; each VNF sending a File Transfer Protocol FTP path of the agent request information file to the VNFM; the VNFM acquiring the access information of the VNFs according to the received FTP paths; wherein, the access information includes an identifier of the accessed VNF (S101);
sending the acquired access information and the agent request information file for accessing EMS to an element management system, EMS (S102).

2. The method for discovering a topology network according to claim 1, wherein, before the VNFM acquires the access information of the VNF managed by the VNFM itself, the method further comprises:
the VNFM receiving an access request sent by the EMS, and
sending access information of the VNFM itself to the EMS according to the access request.

3. The method for discovering a topology network according to claim 1 or 2, wherein, the VNFM acquiring access information of a VNF managed by the VNFM itself comprises:
the VNFM sending an access agent information request to all VNFs managed by the VNFM itself, and receiving the access information of the VNFs sent by the VNFs.

4. The method for discovering a topology network according to claim 1, wherein, the method further comprises:
the VNFM sending a notification of cancelling access of a VNF to the EMS when the VNF managed by the VNFM is cancelled.

5. The method for discovering a topology network according to claim 1, further comprising:
the EMS receiving the access information and the FTP path of the agent request information file for accessing EMS, sent by the VNFM, of the VNF managed by the VNFM (S201), and
accessing the VNF to EMS topology management according to the access information; wherein accessing the VNF to EMS topology management according to the access information comprising: the EMS downloading and parsing the agent request information file for accessing EMS according to the received FTP path of the agent request information file for accessing EMS, and accessing the VNF to the EMS topology management (S202).

6. The method for discovering a topology network according to claim 5, wherein, before the EMS receives the access information, sent by the VNFM, of the VNF managed by the VNFM, the method further comprises:
when querying that there is a VNFM, the EMS acquiring access information of the VNFM; and
accessing the VNFM to EMS topology management according to the access information of the VNFM.

7. The method for discovering a topology network according to claim 5, wherein, accessing the VNF to EMS topology management according to the access information comprises:
according to the FTP path of an agent request information file for a VNF to access EMS in the access information, downloading and parsing the request information file for accessing EMS, and accessing the VNF to the EMS topology management.

8. The method for discovering a topology network according to claim 7, wherein, after the EMS accesses the VNF to the EMS topology management, the method further comprises:
the EMS receiving a notification, sent by the VNFM, of cancelling access of a VNF, and deleting the access of the VNF according to the notification.

9. A system for discovering a topology network, comprising a virtualized network function manager, VNFM, and a plurality of virtual network functions, VNFs, wherein the VNFM comprises: a first acquisition module (11) and a first sending module (12); wherein,
the first acquisition module (11) is arranged to acquire access information of a VNF managed by the VNFM itself; **characterized in that**, the first acquisition module (11) is arranged to acquire access information of a VNF managed by the VNFM itself in following way:
the first acquisition module (11) sending an EMS access agent information request to all VNFs managed by the VNFM itself; each VNF acquiring its own access information according to the EMS access agent information request and a defined standard interface for accessing the EMS between the VNF and the VNFM, and generating and storing an agent request information file for accessing EMS; each VNF sending a File Transfer Protocol FTP path of the agent request information file to the first acquisition module (11); the first acquisition module (11) acquiring the access information of the VNFs according to the received FTP paths; wherein, the access information includes an identifier of the accessed VNF;
the first sending module (12) is arranged to send the acquired access information and the agent request information file for accessing EMS to an EMS.

10. The system for discovering a topology network according to claim 9, wherein the VNFM further comprises: a first receiving module (13), arranged to receive an access request sent by the EMS;
correspondingly, the first sending module (12) is arranged to send access information of the VNFM itself according to the access request.

11. The system for discovering a topology network according to claim 9, wherein, the first acquisition module (11) is arranged to send an access agent information request to all VNFs managed by the VNFM itself, and receive the access information of the VNFs sent by the VNFs; and
the first sending module (11) is further arranged to send a notification of cancelling access of a VNF to the EMS when the VNF managed by the VNFM is cancelled.

12. The system for discovering a topology network according to claim 9, further comprising an element management system EMS, comprising: a second receiving module (21) and an access module (22); wherein,
the second receiving module (21) is arranged to receive access information, sent by a VNFM, of a VNF managed by the VNFM; and
the access module (22) is arranged to access the VNF to EMS topology management according to the access information; wherein the access module (22) is arranged to access the VNF to EMS topology management according to the access information in following ways: downloading and parsing the agent request information file for accessing EMS according to the received FTP path of the agent request information file for accessing EMS, and accessing the VNF to the EMS topology management.

13. The system for discovering a topology network according to claim 12, further comprising: a second acquisition module (23), arranged to query a VNFM and acquire access information of the VNFM;
correspondingly, the access module (22) is further arranged to access the VNFM to EMS topology management according to the access information of the VNFM; and
wherein, the access module (22) is arranged to, according to an FTP path of an agent request information file for a VNF to access EMS in the access information, download and parse the request information file for accessing EMS, and access the VNF to the EMS topology management.

14. The system for discovering a topology network according to claim 12, further comprising: a deletion module (24), arranged to, after the second receiving module receives a notification, sent by the VNFM, of cancelling access of a VNF, delete the access of the VNF according to the notification.

15. A computer storage medium, wherein a plurality of computer executable instructions is stored in the computer storage medium, and the computer executable instructions execute all the steps of the method for discovering a topology network according to any one of claims 1 to 8.

## Patentansprüche

1. Verfahren zur Entdeckung eines Topologienetzwerks, umfassend:
einen virtualisierten Netzwerkfunktion-Manager, VNFM, der Zugriffsinformationen einer virtualisierten Netzwerkfunktion, VNF, erfasst, die durch den VNFM selbst verwaltet wird, **dadurch gekennzeichnet, dass** das Erfassen der Zugriffsinformationen der VNF, die durch den VNFM selbst verwaltet wird, durch den VNFM Folgendes umfasst: Senden einer EMS-Zugriff-Agent-Informationsanforderung durch den VNFM an alle durch den VNFM selbst verwalteten VNF; Erfassen ihrer eigenen Zugriffsinformationen gemäß der EMS-Zugriff-Agent-Informationsanforderung und einer definierten Standardschnittstelle für den EMS-Zugriff zwischen der VNF und dem VNFM und Erzeugen und Speichern einer Agent-Anforderungsinformationsdatei für den EMS-Zugriff durch jede VNF; Senden eines Dateiübertragungsprotokoll, FTP, - Pfads der Agent-Anforderungsinformationsdatei an den VNFM durch jede VNF; Erfassen der Zugriffsinformationen der VNF gemäß den empfangenen FTP-Pfaden durch den VNFM; wobei die Zugriffsinformationen eine Kennung der VNF, auf die zugegriffen wird, umfasst (S101);
Senden der erfassten Zugriffsinformationen und der Agent-Anforderungsinformationsdatei für den EMS-Zugriff an ein Element-Verwaltungssystem, EMS (S102).

2. Verfahren zur Entdeckung eines Topologienetzwerks nach Anspruch 1, wobei, bevor der VNFM die Zugriffsinformationen der durch den VNFM selbst verwalteten VNF erfasst, das Verfahren ferner Folgendes umfasst:
Empfangen einer durch das EMS gesendeten Zugriffsanforderung durch den VNFM, und
Senden von Zugriffsinformationen des VNFM selbst an das EMS gemäß der Zugriffsanforderung.

3. Verfahren zur Entdeckung eines Topologienetzwerks nach Anspruch 1 oder 2, wobei das Erfassen von Zugriffsinformationen einer VNF, die durch den VNMF selbst verwaltet wird, durch den VNMF Folgendes umfasst:
Senden einer Zugriff-Agent-Informationsanforderung an alle durch den VNFM selbst verwalteten VNF durch den VNFM und Empfangen der durch die VNF gesendeten Zugriffsinformationen der VNF.

4. Verfahren zur Entdeckung eines Topologienetzwerks nach Anspruch 1, wobei das Verfahren ferner Folgendes umfasst:
Senden einer Benachrichtigung der Aufhebung des Zugriffs einer VNF durch den VNFM an das EMS, wenn die durch den VNFM verwaltete VNF aufgehoben wird.

5. Verfahren zur Entdeckung eines Topologienetzwerks nach Anspruch 1, ferner umfassend:
Empfangen der/des durch den VNFM gesendeten Zugriffsinformationen und FTP-Pfades der Agent-Anforderungsinformationsdatei für den EMS-Zugriff der durch den VNFM verwalteten VNF durch das EMS (S201), und
Zugreifen auf die VNF zur EMS-Topologieverwaltung gemäß den Zugriffsinformationen; wobei das Zugreifen auf die VNF zur EMP-Topologieverwaltung gemäß den Zugriffsinformationen Folgendes umfasst: durch das EMS, Herunterladen und Parsing der Agent-Anforderungsinformationsdatei für den EMS-Zugriff gemäß dem empfangenen FTP-Pfad der Agent-Anforderungsinformationsdatei für den EMS-Zugriff und Zugreifen auf die VNF zur EMS-Topologieverwaltung (S202).

6. Verfahren zur Entdeckung eines Topologienetzwerks nach Anspruch 5, wobei, bevor das EMS die durch den VNFM gesendeten Zugriffsinformationen der durch den VNFM verwalteten VNF empfängt, das Verfahren ferner Folgendes umfasst:
beim Abfragen, dass ein VNFM vorhanden ist, Erfassen von Zugriffsinformationen des VNFM durch das EMS; und
Zugreifen auf den VNFM zur EMS-Topologieverwaltung gemäß den Zugriffsinformationen des VNFM.

7. Verfahren zur Entdeckung eines Topologienetzwerks nach Anspruch 5, wobei das Zugreifen auf die VNF zur EMS-Topologieverwaltung gemäß den Zugriffsinformationen Folgendes umfasst:
gemäß dem FTP-Pfad einer Agent-Anforderungsinformationsdatei für eine VNF zum EMS-Zugriff in den Zugriffsinformationen, Herunterladen und Parsing der Anforderungsinformationsdatei für den EMS-Zugriff, und Zugreifen auf die VNF zur EMS-Topologieverwaltung.

8. Verfahren zur Entdeckung eines Topologienetzwerks nach Anspruch 7, wobei, nachdem das EMS auf die VNF zur EMS-Topologieverwaltung zugreift ist, das Verfahren ferner Folgendes umfasst:
durch das EMS, Empfangen einer durch den VNFM gesendeten Benachrichtigung zum Aufheben des Zugriffs einer VNF und Löschen des VNF-Zugriffs gemäß der Benachrichtigung.

9. System zur Entdeckung eines Topologienetzwerks, umfassend einen virtualisierte Netzwerkfunktion-Manager, VNFM, und eine Vielzahl von virtualisierte Netzwerkfunktionen, VNF, wobei der VNFM Folgendes umfasst:
ein erstes Erfassungsmodul (11) und ein erstes Sendemodul (12); wobei
das erste Erfassungsmodul (11) angeordnet ist, um Zugriffsinformationen einer durch den VNFM selbst verwalteten VNF zu erfassen; **dadurch gekennzeichnet, dass** das erste Erfassungsmodul (11) angeordnet ist, um Zugriffsinformationen einer durch den VNFM selbst verwalteten VNF auf die folgende Art und Weise zu erfassen:
Senden einer EMS- Zugriff-Agent-Informationsanforderung an alle durch den VNFM selbst verwalteten VNF durch das erste Erfassungsmodul (11); Erfassen ihrer eigenen Zugriffsinformationen gemäß der EMS- Zugriff-Agent-Informationsanforderung und einer definierten Standardschnittstelle für den EMS-Zugriff zwischen der VNF und dem VNFM und Erzeugen und Speichern einer Agent-Anforderungsinformationsdatei für den EMS-Zugriff durch jede VNF; Senden eines Dateiübertragungsprotokoll, FTP, -Pfads der Agent-Anforderungsinformationsdatei an das erste Erfassungsmodul (11) durch jede VNF; Erfassen der Zugriffsinformationen der VNF gemäß den empfangenen FTP-Pfaden durch das erste Erfassungsmodul (11); wobei die Zugriffsinformationen eine Kennung der VNF, auf die zugegriffen wird, umfasst;
das erste Sendemodul (12) angeordnet ist, um die erfassten Zugriffsinformationen und die Agent-Anforderungsinformationsdatei für den EMS-Zugriff an ein EMS zu senden.

10. System zur Entdeckung eines Topologienetzwerks nach Anspruch 9, wobei der VNFM ferner Folgendes umfasst: ein erstes Empfangsmodul (13), das angeordnet ist, um eine durch das EMS gesendete Zugriffsanforderung zu empfangen;
das erste Sendemodul (12) dementsprechend angeordnet ist, um Zugriffsinformationen des VNFM selbst gemäß der Zugriffsanforderung zu senden.

11. System zur Entdeckung eines Topologienetzwerks nach Anspruch 9, wobei das erste Erfassungsmodul (11) angeordnet ist, um eine Zugriff-Agent-Informationsanforderung an alle durch den VNFM selbst verwalteten VNF zu senden und die durch die VNF gesendeten Zugriffsinformationen der VNF zu empfangen; und
das erste Sendemodul (11) ferner angeordnet ist, um eine Benachrichtigung der Aufhebung des Zugriffs einer VNF an das EMS zu senden, wenn die durch den VNFM verwaltete VNF aufgehoben wird.

12. System zur Entdeckung eines Topologienetzwerks nach Anspruch 9, ferner umfassend ein Element-Verwaltungssystem EMS, umfassend: ein zweites Empfangsmodul (21) und ein Zugriffsmodul (22); wobei
das zweite Empfangsmodul (21) angeordnet ist, um durch ein VNFM gesendete Zugriffsinformationen einer durch den VNFM verwalteten VNF zu empfangen; und
das Zugriffsmodul (22) angeordnet ist, um gemäß den Zugriffsinformationen auf die VNF zur EMS-Topologieverwaltung zuzugreifen; wobei das Zugriffsmodul (22) angeordnet ist, um auf die folgenden Arten gemäß den Zugriffsinformationen auf die VNF zur EMS-Topologieverwaltung zuzugreifen: Herunterladen und Parsing der Agent-Anforderungsinformationsdatei für den EMS-Zugriff gemäß dem empfangenen FTP-Pfad der Agent-Anforderungsinformationsdatei für den EMS-Zugriff und VNF-Zugriff zur EMS-Topologieverwaltung.

13. System zur Entdeckung eines Topologienetzwerks nach Anspruch 12, ferner umfassend: ein zweites Erfassungsmodul (23), das angeordnet ist, um einen VNFM abzufragen und Zugriffsinformationen des VNFM zu erfassen;
das Zugriffsmodul (22) dementsprechend ferner für den VNFM-Zugriff zur EMS-Topologieverwaltung gemäß den Zugriffsinformationen des VNFM angeordnet ist; und
wobei das Zugriffsmodul (22) angeordnet ist, um gemäß einem FTP-Pfad einer Agent-Anforderungsinformationsdatei für eine VNF zum EMS-Zugriff in den Zugriffsinformationen die Anforderungsinformationsdatei für den EMS-Zugriff herunterzuladen und zu parsen und auf die VNF zur EMS-Topologieverwaltung zuzugreifen.

14. System zur Entdeckung eines Topologienetzwerks nach Anspruch 12, ferner umfassend: ein Löschungsmodul (24), das angeordnet ist, um, nachdem das zweite Empfangsmodul eine durch den VNFM gesendete Benachrichtigung zum Aufheben des Zugriffs einer VNF empfangen hat, den VNF-Zugriff gemäß der Benachrichtigung zu löschen.

15. Rechnerspeichermedium, wobei eine Vielzahl von durch Rechner ausführbaren Befehlen in dem Rechnerspeichermedium gespeichert sind und die durch Rechner ausführbaren Befehle sämtliche von den Schritten des Verfahrens zur Entdeckung eines Topologienetzwerks nach einem der Ansprüche 1 bis 8 ausführen.

## Revendications

1. Procédé de découverte d'un réseau à topologie, comprenant :
un gestionnaire de fonction réseau virtualisée, VNFM, acquérant des informations d'accès d'une fonction réseau virtualisée, VNF, gérée par le VNFM lui-même, **caractérisé en ce que** le VNFM acquérant les informations d'accès de la VNF gérée par le VNFM lui-même comprend : le VNFM envoyant une demande d'informations d'agent d'accès d'EMS (système de gestion d'éléments), à toutes les VNF gérées par le VNFM lui-même ; chaque VNF acquérant ses propres informations d'accès en fonction de la demande d'informations d'agent d'accès d'EMS et d'une interface standard définie pour accéder à l'EMS entre la VNF et le VNFM, et générant et stockant un fichier d'informations de demande d'agent pour accéder à l'EMS ; chaque VNF envoyant un chemin de protocole de transfert de fichiers FTP du fichier d'informations de demande d'agent au VNFM ; le VNFM acquérant les informations d'accès des VNF en fonction des chemins FTP reçus ; dans lequel les informations d'accès comprennent un identifiant de la VNF consultée (S101) ;
envoyer les informations d'accès acquises et le fichier d'informations de demande d'agent pour accéder à l'EMS à un système de gestion d'éléments, EMS (S102).

2. Procédé de découverte d'un réseau à topologie selon la revendication 1, dans lequel, avant que le VNFM n'acquière les informations d'accès de la VNF gérée par le VNFM lui-même, le procédé comprend en outre :
le VNFM recevant une demande d'accès envoyée par l'EMS, et
envoyer des informations d'accès du VNFM lui-même à l'EMS en fonction de la demande d'accès.

3. Procédé de découverte d'un réseau à topologie selon la revendication 1 ou 2, dans lequel le VNFM acquérant des informations d'accès d'une VNF gérée par le VNFM lui-même comprend :
le VNFM envoyant une demande d'informations d'agent d'accès à toutes les VNF gérées par le VNFM lui-même, et recevant les informations d'accès des VNF envoyées par les VNF.

4. Procédé de découverte d'un réseau à topologie selon la revendication 1, dans lequel le procédé comprend en outre :
le VNFM envoyant une notification d'annulation d'accès d'une VNF à l'EMS lorsque la VNF gérée par le VNFM est annulée.

5. Procédé de découverte d'un réseau à topologie selon la revendication 1, comprenant en outre :
l'EMS recevant les informations d'accès et le chemin FTP du fichier d'informations de demande d'agent pour accéder à l'EMS, envoyés par le VNFM, de la VNF gérée par le VNFM (S201), et
faire accéder la VNF à une gestion de topologie d'EMS en fonction des informations d'accès ; l'accès de la VNF à la gestion de topologie d'EMS en fonction des informations d'accès comprenant : l'EMS téléchargeant et analysant le fichier d'informations de demande d'agent pour accéder à l'EMS en fonction du chemin FTP reçu du fichier d'informations de demande d'agent pour accéder à l'EMS, et faire accéder la VNF à la gestion de topologie d'EMS (S202).

6. Procédé de découverte d'un réseau à topologie selon la revendication 5, dans lequel, avant que l'EMS ne reçoive les informations d'accès, envoyées par le VNFM, de la VNF gérée par le VNFM, le procédé comprend en outre :
lors d'une interrogation pour déterminer si un VNFM est présent, l'EMS acquiert des informations d'accès du VNFM ; et
faire accéder le VNFM à une gestion de topologie d'EMS en fonction des informations d'accès du VNFM.

7. Procédé de découverte d'un réseau à topologie selon la revendication 5, dans lequel l'accès de la VNF à la gestion de topologie d'EMS en fonction des informations d'accès comprend :
en fonction du chemin FTP d'un fichier d'informations de demande d'agent pour qu'une VNF accède à l'EMS dans les informations d'accès, télécharger et analyser le fichier d'informations de demande pour accéder à l'EMS, et faire accéder la VNF à la gestion de topologie d'EMS.

8. Procédé de découverte d'un réseau à topologie selon la revendication 7, dans lequel, après que l'EMS a fait accéder la VNF à la gestion de topologie d'EMS, le procédé comprend en outre :
l'EMS recevant une notification, envoyée par le VNFM, d'annulation d'accès d'une VNF, et supprimant l'accès de la VNF en fonction de la notification.

9. Système de découverte d'un réseau à topologie, comprenant un gestionnaire de fonction réseau virtualisée, VNFM, et une pluralité de fonctions réseau virtualisées, VNF, dans lequel le VNFM comprend :
un premier module d'acquisition (11) et un premier module d'envoi (12) ; dans lequel
le premier module d'acquisition (11) est conçu pour acquérir des informations d'accès d'une VNF gérée par le VNFM lui-même ; **caractérisé en ce que** le premier module d'acquisition (11) est conçu pour acquérir des informations d'accès d'une VNF gérée par le VNFM lui-même de la manière suivante :
le premier module d'acquisition (11) envoie une demande d'informations d'agent d'accès d'EMS à toutes les VNF gérées par le VNFM lui-même ; chaque VNF acquiert ses propres informations d'accès en fonction de la demande d'informations d'agent d'accès d'EMS et d'une interface standard définie pour accéder à l'EMS entre la VNF et le VNFM, et génère et stocke un fichier d'informations de demande d'agent pour accéder à l'EMS ; chaque VNF envoie un chemin de protocole de transfert de fichiers FTP du fichier d'informations de demande d'agent au premier module d'acquisition (11) ; le premier module d'acquisition (11) acquiert les informations d'accès des VNF en fonction des chemins FTP reçus ; les informations d'accès comprenant un identifiant de la VNF consultée ;
le premier module d'envoi (12) est conçu pour envoyer les information d'accès acquises et le fichier d'informations de demande d'agent permettant d'accéder à l'EMS à un EMS.

10. Système de découverte d'un réseau à topologie selon la revendication 9, dans lequel le VNFM comprend en outre : un premier module de réception (13), conçu pour recevoir une demande d'accès envoyée par l'EMS ;
de façon correspondante, le premier module d'envoi (12) est conçu pour envoyer des informations d'accès du VNFM lui-même en fonction de la demande d'accès.

11. Système de découverte d'un réseau à topologie selon la revendication 9, dans lequel le premier module d'acquisition (11) est conçu pour envoyer une demande d'informations d'agent d'accès à toutes les VNF gérées par le VNFM lui-même, et recevoir les informations d'accès des VNF envoyées par les VNF ; et
le premier module d'acquisition (11) est en outre conçu pour envoyer une notification d'annulation d'accès d'une VNF à l'EMS lorsque la VNF gérée par le VNFM est annulée.

12. Système de découverte d'un réseau à topologie selon la revendication 9, comprenant en outre un système de gestion d'éléments EMS, comprenant : un second module de réception (21) et un module d'accès (22) ; dans lequel
le second module de réception (21) est conçu pour recevoir des informations d'accès, envoyées par un VNFM, d'une VNF gérée par le VNFM ; et
le module d'accès (22) étant conçu pour faire accéder la VNF à une gestion de topologie d'EMS en fonction des informations d'accès ; dans lequel le module d'accès (22) est conçu pour faire accéder la VNF à une gestion de topologie d'EMS en fonction des informations d'accès de la manière suivante : télécharger et analyser le fichier d'informations de demande d'agent pour accéder à l'EMS en fonction du chemin FTP reçu du fichier d'informations de demande d'agent pour accéder à l'EMS, et faire accéder la VNF à la gestion de topologie d'EMS.

13. Système de découverte d'un réseau à topologie selon la revendication 12, comprenant en outre : un second module d'acquisition (23), conçu pour interroger un VNFM et acquérir des informations d'accès du VNFM ;
de façon correspondante, le module d'accès (22) est en outre conçu pour faire accéder le VNFM à la gestion de topologie d'EMS en fonction des informations d'accès du VNFM ; et
dans lequel le module d'accès (22) est conçu pour, en fonction d'un chemin FTP d'un fichier d'informations de demande d'agent pour qu'une VNF accède à l'EMS dans les informations d'accès, télécharger et analyser le fichier d'informations de demande pour accéder à l'EMS, et faire accéder la VNF à la gestion de topologie d'EMS.

14. Système de découverte d'un réseau à topologie selon la revendication 12, comprenant en outre : un module de suppression (24), conçu pour, après que le second module de réception a reçu une notification, envoyée par le VNFM, d'annulation d'accès d'une VNF, supprimer l'accès de la VNF en fonction de la notification.

15. Support de stockage informatique, dans lequel une pluralité d'instructions exécutables par ordinateur sont stockées dans le support de stockage informatique, et les instructions exécutables par ordinateur exécutent toutes les étapes du procédé de découverte d'un réseau à topologie selon l'une quelconque des revendications 1 à 8.
